# EUROPÄISCHE PATENTANMELDUNG

(11) **EP 2 364 767 A1**
(43) Veröffentlichungstag der Anmeldung: **14.09.2011**
(21) Anmeldenummer: 11151790.0
(22) Anmeldetag: 24.01.2011
(51) Int. Cl.: B01D 53/14, B01D 53/62

(54) **Desorber einer CO2-Rauchgaswäsche und Verfahren zur Abkühlung des darin erzeugten CO2-Fluidstroms**

(30) Priorität: 27.01.2010 DE 102010006031; 06.05.2010 DE 102010019511
(71) Anmelder: Hitachi Power Europe GmbH, 47059 Duisburg (DE)
(72) Erfinder: Stöver, Brian, 45665, Recklinghausen (DE)
(74) Vertreter: Viering, Jentschura & Partner

(57) **Zusammenfassung**

Bei einem Desorber mit zugeordneter Waschstufe (12), der mit einem zugeordneten Absorber (2) Bestandteil einer CO₂-Wäsche (1) des Rauchgases (7) eines insbesondere fossil befeuerten, vorzugsweise kohlebefeuerten, Kraftwerks ist und in dem ein CO₂-haltiger, auf eine für seine Weiterbehandlung in einer nachgeschalteten CO₂-Kompressionsstufe geeignete Temperatur gekühlter Fluidstrom (10) entsteht, soll eine Lösung geschaffen werden, die eine Verringerung der Baugröße der für die Erzielung der Abkühlung des CO₂-haltigen Fluidstroms auf eine für seine Weiterbehandlung in einer nachgeschalteten CO₂-Kompressionsstufe geeignete Temperatur insgesamt benötigten Wärmetauscherfläche ermöglicht. Dies wird dadurch erreicht, dass die dem Desorber (3) zugeordnete Waschstufe (12) eine die Auskopplung der zur Erreichung der geeigneten Temperatur des CO₂-haltigen Fluidstroms insgesamt notwendigen thermischen Energie bewirkende Kühlleistung aufweist oder bereitstellt und in einem Waschwasserkreislauf (17) mit Kondensatrückführung der Waschstufe (12) mindestens ein zumindest zur annähernden Erreichung der Kühlleistung dimensionierter Wärmetauscher (19) angeordnet ist.

## Beschreibung

Die Erfindung richtet sich auf ein Verfahren zur Abkühlung eines CO₂-haltigen, in einem Desorber einer der Brennstoffverbrennung einesKraftwerks nachgeschalteten CO₂-Wäsche des Rauchgases mittels chemischer Absorption entstehenden Fluidstromes in einer Waschstufe des Desorbers auf eine für seine Weiterbehandlung in einer dem Desorber nachgeschalteten und/oder zugeordneten CO₂-Kompressionsstufe geeignete Temperatur. Weiterhin richtet sich die Erfindung auf einen Desorber mit zugeordneter Waschstufe, der mit einem zugeordneten Absorber Bestandteil einer CO₂-Wäsche des Rauchgases eines Kraftwerks ist und in dem ein CO₂-haltiger, auf eine für seine Weiterbehandlung in einer nachgeschalteten CO₂-Kompressionsstufe geeignete Temperatur gekühlter Fluidstrom entsteht.

Seit geraumer Zeit, spätestens seit Unterzeichnung des Kyoto-Protokolls, werden intensive Anstrengungen unternommen, um die Emission des bei der Verbrennung fossiler Brennstoffe entstehenden Gases CO₂ in die Atmosphäre zu vermindern, um dieses für die Klimaerwärmung verantwortliche Treibhausgas in der Atmosphäre zu reduzieren. Bei fossil befeuerten, insbesondere kohlebefeuerten, Kraftwerken stehen hierfür drei grundsätzliche Verfahrensrouten zur Verfügung: Die Abscheidung vor der Verbrennung, die integrierte Abscheidung und die Abscheidung nach der Verbrennung.

Das Prinzip der Abscheidung vor der Verbrennung (precombustion) basiert auf der Umsetzung des fossilen Brennstoffes zu einem aus Kohlenmonoxid und Wasserstoff bestehenden Synthesegas, wobei in einem weiteren Schritt das Kohlenmonooxid zu Kohlendioxid (CO₂) aufoxidiert und dann aus dem Prozess entfernt wird.

Die integrierte Abscheidung wird beim so genannten Oxy-Fuel-Prozess realisiert. Hierbei wird ein hochkonzentrierter Kohlendioxid (CO₂) -Abgasstrom durch die Verbrennung des fossilen Brennstoffes, insbesondere Kohle, mit reinem Sauerstoff anstelle von Luft erzeugt, der nach Kondensation des Wasserdampfanteils ohne zusätzliche Wäsche direkt entsorgt werden könnte, wobei fraglich ist, ob dies genehmigungsfähig und ein direktes Verpressen in den Boden zulässig sein wird.

Bei dem dritten Verfahren, der Abscheidung nach der Verbrennung (post-combustion), das insbesondere bei konventionellen Kraftwerken Anwendung findet, wird das Kohlendioxid (CO₂) mittels einer Wäsche abgetrennt. Hierbei wird das Rauchgas am Ende des Rauchgasreinigungsstranges mittels einer CO₂-Wäsche mittels chemischer Absorption aus dem Rauchgas größtenteils entfernt, so dass ein CO₂-armes Abgas das Kraftwerk verlässt. Diese CO₂-Wäsche findet in einem Absorber statt, wobei die chemische Absorption mittels eines Waschmittels, insbesondere Monoethanolamin (MEA), aber auch Diethanolamin (DEA) oder Methyldiethanolamin (MDEA), erfolgt. Das mit CO₂ beladene Waschmittel wird in einem Desorber oder Regenerator von dem CO₂ befreit und aufbereitet und anschließend im Kreislauf zum Absorber zurückgeführt. Den Desorber oder Regenerator verlässt ein höchst CO₂-haltiges Abgas, das in einer anschließenden CO₂-Kompression verflüssigt und danach zur endgültigen Lagerung oder Weiterverwendung aus dem Bereich des Kraftwerks entfernt wird. Der große Vorteil dieses Verfahrens besteht darin, dass damit bestehende konventionelle Kraftwerksanlagen ohne weiteres nachrüstbar sind. Der Nachteil dieses Verfahrens ergibt sich aus dem für die CO₂-Abscheidung notwendigen hohen Energieaufwand. Zum einen ist für die Regeneration des eingesetzten Waschmittels ein hoher Energiebedarf erforderlich, der üblicherweise in Form von aus dem Wasser-Dampf-Kreislauf des zugeordneten Kraftwerkes abgezapftem Dampf gedeckt wird. Mit diesem abgezapften Dampf wird ein Reboiler oder Verdampfer des Desorbers oder Regenerators gespeist, mittels welchem das im Kreislauf geführte Waschmittel auf die für die Austreibung von CO₂ notwendige Temperatur erhitzt wird. Weiterer energetischer Aufwand wird für die anschließende CO₂-Kompression zur Verflüssigung des Kohlendioxids benötigt. Schließlich wird auch noch zusätzliche Energie benötigt, um das zunächst drucklose Rauchgas vor dem Absorber der CO₂-Wäsche des Rauchgases auf den notwendigen Absorberdruck anzuheben. Aufgrund dieses relativ hohen Energieaufwandes für die CO₂-Wäsche mit zugeordneter CO₂-Kompression wird der Wirkungsgrad des zugeordneten Kraftwerkes - im Vergleich zu einem solchen ohne CO₂-Wäsche - vermindert. Auch hat die Maßnahme des Abführens von Anzapfdampf aus dem Wasser-Dampf-Kreislauf des Kraftwerkes Einfluss auf diesen Kreislauf und die Energieströme, insbesondere die Wärmeenergieströme des Kraftwerks, auch wenn der Dampf in kondensierter Form wieder rückgeführt wird.

Bei der Technik, CO₂aus Gasen mit Hilfe aminhaltiger Waschmittel abzuscheiden, wird in einem eine Absorptionskolonne aufweisenden Absorber das CO₂-haltige Gas, beispielsweise Rauchgas, mit einem Wasch- oder Lösungsmittel in Kontakt gebracht. Dieses Wasch- oder Lösungsmittel nimmt das CO₂aus dem Gas auf, so dass das vom CO₂ gereinigte Gas aus dem Absorber abgeführt werden kann. Das mit CO₂ beladene Wasch- oder Lösungsmittel wird dann der Desorptionskolonne eines Desorbers zugeführt. In dieser Desorptionskolonne wird das CO₂ mittels thermischer Energie aus dem Wasch- oder Lösungsmittel ausgetrieben. Gleichzeitig findet eine Regeneration des Wasch- oder Lösungsmittels statt, das dann im Kreislauf wieder dem Absorber zugeführt wird. Mittels eines Kreuzstromwärmetauschers, der mit Zu- und Abführleitungen vom Desorber und Absorber verbunden ist, lässt sich ein interner Wärmetausch des Wasch- oder Lösungsmittels zwischen dem Desorber-Eintrittsstrom und dem Desorber-Austrittsstrom realisieren.

Neben der eigentlichen Desorptionskolonne weist ein üblicher Desorber darüber hinaus in seinem oberen Kopfende eine Waschstufe auf. In dem Desorber wird aus dem CO₂-beladenen Wasch- oder Lösungsmittel ein CO₂-haltiger Fluidstrom gebildet, der nach einer entsprechenden Kühlung in der Waschstufe aus dem Desorber abgeführt und einer nachgeschalteten CO₂-Kompression zugeführt wird. Hierbei ist aus der Praxis eine Ausgestaltung des Desorbers bekannt, bei welcher in der Waschstufe des Desorbers der wasserhaltige und wasch- und lösungsmittelhaltige, in der Desorptionskolonne des Desorbers aufsteigende CO₂-haltige Fluidstrom von einer Temperatur im Desorberkopf von ca. 105°C auf etwa 100°C abgekühlt wird. Zielsetzung dieser Waschstufe ist es, den Wasser-, vor allem aber den Wasch- und Lösungsmittelanteil im CO₂-Fluid zu reduzieren. Durch die in der Waschstufe im Desorberkopf erfolgende Abkühlung werden diese Bestandteile teilweise auskondensiert. Der auskondensierte Massenstrom geht in den Waschwasserstrom des Desorbers über. Der mit einer Temperatur von ca. 100°C den Desorber verlassende CO₂― haltige Fluidstrom wird dann einer zugeordneten und nachgeschalteten CO₂-Kompression zur Verflüssigung des CO₂ zugeführt. Da der ca. 100°C warme CO₂-haltige Fluidstrom zunächst aber immer noch einen hohen Wasseranteil von ca. 30 Gew.-% und damit auch eine für die CO₂-Kompression eigentlich nicht geeignete Temperatur aufweist, ist in der Verbindungsleitung zu der CO₂-Kompression ein Kondensator in Form eines Wärmetauschers angeordnet. Während der Waschmittel- und Lösungsmittelanteil in dem CO₂-Fluidstrom aufgrund der höheren Siedetemperatur und der Löslichkeit bereits im Waschwasser in der Waschstufe des Desorbers in ausreichender Weise abgeschieden worden ist, findet in diesem weiteren Kondensator nun eine Abkühlung des CO₂-haltigen Fluidstroms auf die für die CO₂-Kompression geeignete Temperatur und eine Trocknung mit Auskondensierung von Wasser statt. Das als Kondensat abgeschiedene Wasser wird im Waschwasserkreislauf mit Kondensatrückführung der Waschstufe zugeführt, während die in dem Wärmetauscher gewonnene Wärme im Wege einer Wärmeintegration an einer beliebigen Stelle des Kraftwerkes oder des Kraftwerkprozesses über eine geeignete Wärmesenke dem Gesamtwärmestrom des Kraftwerkprozesses wieder zugeführt werden kann. In dem Waschwasserlauf mit Kondensatrückführung der Waschstufe ist ferner ein kühlwasserbeaufschlagter Zusatzwärmetauscher in Form eines Rückkühlers angeordnet, mit dem das im Waschwasserkreislauf mit Kondensatrückführung der Waschstufe geführte Kondensat auf eine solche Temperatur, ca. 50°C, abgekühlt wird, dass damit in der Waschstufe des Desorbers eine Abkühlung des CO₂-haltigen Fluidstromes auf die Temperatur von ca. 100°C erreicht wird. Ein zum auskondensierten Wasch- oder Lösungsmittel/Waschwasser-Strom äquivalenter Massenstrom wird dem Desorber-Eintrittsstrom des hoch CO₂-beladenen, vom Absorber zugeführten Wasch- oder Lösungsmittel aus dem Waschwasserkreislauf mit Kondensatrückführung der Waschstufe zugegeben, da andernfalls ein solcher Massenstrom dem Absorber/Desorber-System kontinuierlich von außen zugegeben werden müsste und zudem überschüssiges Kondensat aus der Waschstufe als Abwasserstrom abgeführt werden müsste.

Nachteilig bei diesem bekannten Stand der Technik ist es, dass zur Abkühlung des CO₂-haltigen Fluids und zur Wärmerückintegration in den Kraftwerksprozess der Waschstufe des Desorbers ein Gas-Flüssig-Wärmetauscher nachgeschaltet ist, der bauartbedingt eine entsprechend große Wärmeaustauschfläche aufweist.

Der Erfindung liegt die Aufgabe zugrunde, eine Lösung zu schaffen, die eine Verringerung der Baugröße der für die Erzielung der Abkühlung des CO₂-haltigen Fluidstroms auf eine für seine Weiterbehandlung in einer nachgeschalteten CO₂-Kompressionsstufe geeignete Temperatur insgesamt benötigten Wärmetauscherfläche ermöglicht.

Bei einem Verfahren der eingangs näher bezeichneten Art wird diese Aufgabe dadurch gelöst, dass die Abkühlung des CO₂-haltigen Fluidstromes ausschließlich in der Waschstufe des Desorbers durchgeführt und die dazu notwendige Auskoppelung thermischer Energie aus dem CO₂-haltigen Fluidstrom ausschließlich im und/oder über einen Waschwasserkreislauf mit Kondensatrückführung der Waschstufe durchgeführt wird.

Bei einem Desorber der eingangs näher bezeichneten Art wird diese Aufgabe erfindungsgemäß dadurch gelöst, dass die dem Desorber zugeordnete Waschstufe eine die Auskopplung der zur Erreichung der geeigneten Temperatur des CO₂-haltigen Fluidstroms insgesamt notwendigen thermischen Energie bewirkende Kühlleistung aufweist oder bereitstellt und in einem Waschwasserkreislauf mit Kondensatrückführung der Waschstufe mindestens ein zumindest zur annähernden Erreichung der Kühlleistung dimensionierter Wärmetauscher angeordnet ist.

Vorteilhafte Ausgestaltungen und zweckmäßige Weiterbildungen der Erfindung sind in den jeweiligen Unteransprüchen angegeben.

Durch die Erfindung wird erreicht, dass die bei der CO₂-Wäsche eines Rauchgases, insbesondere bei der Wiederaufbereitung des Wasch- oder Lösungsmittels im Desorber der CO₂-Wäsche entstehende Abwärme effektiv abgeführt werden und gewünschtenfalls über eine Wärmesenke an geeigneter Stelle des Kraftwerksprozesses wieder dem Wärmestrom des Kraftwerkprozesses zugeführt werden kann. Außerdem wird durch die Erfindung eine Reduzierung der Baugrößen der benötigten Wärmetauscher und damit eine Verringerung der insgesamt für die Abkühlung des im Desorber entstehenden CO₂-haltigen Fluidstromes insgesamt benötigte Wärmetauscherfläche erreicht. Durch die Erfindung lässt sich die gewünschte Abkühlung des wasch- oder lösungsmittel- und wasserbeladenen CO₂-haltigen Fluidstromes in einem Schritt in der Waschstufe des Desorbers durchführen, wobei in der bezüglich ihrer Kühlleistung gegenüber dem vorbekannten Stand der Technik vergrößerten Waschstufe eine Abkühlung des CO₂-haltigen Fluidstromes, die Kondensation des darin mitgeführten Wassers und mittels des Waschwasserkreislaufes mit Kondensatrückführung der Waschstufe eine Wärmerückintegration der Abwärme der dem Waschwasserkreislauf mit Kondensatrückführung der Waschstufe entkoppelten thermischen Energie in eine gewünschte Wärmesenke des Wärmestroms des Kraftwerksprozesses erreicht und durchgeführt wird oder erreichbar und durchführbar ist. Erfindungsgemäß wird in der Waschstufe somit der CO₂-haltige Fluidstrom auf die für seine Weiterbehandlung in einer nachgeschalteten CO₂-Kompressionsstufe geeignete Temperatur von beispielsweise ca. 40°C abgekühlt.

Besonders vorteilhaft und zweckmäßig ist das Verfahren im Zusammenhang mit einer einem fossil befeuerten Kraftwerk nachgeschalteten CO₂-Wäsche durchführbar. Die Erfindung sieht daher weiterhin vor, dass das Verfahren in einer einem fossil befeuerten Kraftwerk nachgeschalteten CO₂-Wäsche durchgeführt wird.

Hierzu eignet sich gemäß Ausgestaltung der Erfindung insbesondere ein erfindungsgemäßer Desorber. Dieser zeichnet sich in Weiterbildung dadurch aus, dass er Bestandteil einer CO₂-Wäsche eines fossil befeuerten, insbesondere kohlebefeuerten, Kraftwerks ist.

Zur Erreichung der für die nachgeschaltete und/oder zugeordnete CO2-Kompression geeignete Temperatur notwendigen Kühlleistung ist in dem Waschwasserkreislauf mit Kondensatrückführung der Waschstufe ein Wärmetauscher vorgesehen, wobei es sich bei diesem Wärmetauscher gemäß einer Weiterbildung der Erfindung insbesondere um einen Wasser/Wasser-Wärmetauscher handelt. Im Vergleich zum vorbekannten Stand der Technik ist die Kühlleistung der Waschstufe vergrößert, so dass in der Waschstufe auch ein größerer Waschstufen-Massenstrom transportiert wird, der die zur Erzielung der Desorbexaustrittstemperatur des CO₂-haltigen Fluidstromes insgesamt abzuführende Wärme bzw. insgesamt abzuführende thermische Energie mit sich führt. Im Waschwasserkreislauf der Waschstufe kann in dem Wasser/Wasser-Wärmetauscher die entsprechende Wärmemenge oder thermische Energie ausgekoppelt und über entsprechende, ein Wärmeträgermedium führende Fluidleitungen an anderer Stelle des Kraftwerksprozesses wieder eingekoppelt werden. Die Vorteile der Erfindung bestehen darin, dass die gesamte, als Abwärme aus dem Desorber abzuführende thermische Energie im Wesentlichen über einen (Haupt-)Wärmetauscher abgeführt und gewünschtenfalls über eine Wärmesenke zurückgeführt werden kann. Die gesamte Grädigkeit der Verschaltung des Desorbers ist durch den Wegfall eines sonst vorhandenen Gas/Flüssig-Wärmetauschers geringer. Auch ist der Materialaufwand insgesamt geringer, da der insbesondere vorgesehene Wasser/Wasser-Wärmetauscher eine kleinere Wärmeaustauscherfläche benötigt als der im Stand der Technik bisher vorgesehene Gas/Flüssig-Wärmetauscher. Dies wird auch nicht durch die Vergrößerung der Waschstufe wieder aufgehoben, da die Größe der Waschstufe insbesondere durch die für das Herauswaschen von Wasch- oder Lösungsmittelanteilen aus dem CO₂-haltigen Fluidstrom und nicht ausschließlich durch die beabsichtigte Abkühlung dieses Fluidstromes bestimmt wird. Durch die erfindungsgemäß sich einstellende geringere Desorberaustrittstemperatur des CO₂-haltigen Fluidstromes reduziert sich der durch die Waschstufe zu führende Volumenstrom des nun kühleren CO₂-haltigen Fluidstromes, so dass die Waschstufe eine sich verjüngende Bauform und damit sich verringernder Materialeinsatz möglich macht.

Zur Wiedereinkoppelung der in dem Waschwasserkreislauf mit Kondensatrückführung der Waschstufe ausgekoppelten thermischen Energie in den Wärmestrom des Kraftwerkes oder Kraftwerkprozesses ist der Wärmetauscher des Desorbers in weiterer Ausgestaltung mit einer ein Wärmeträgermedium führenden Verbindungsleitung ausgestattet. Diese kann in Verbindung mit einer im Kraftwerksprozess oder im Kraftwerk angeordneten Wärmesenke stehen. Die Erfindung zeichnet sich daher weiterhin dadurch aus, dass der Wärmetauscher eine die Wiedereinkoppelung der in dem Waschwasserkreislauf mit Kondensatrückführung der Waschstufe ausgekoppelten thermischen Energie in den Wärmestrom des Kraftwerks oder Kraftwerkprozesses bewirkende und ein Wärmeträgermedium führende Verbindungsleitung aufweist.

Es ist aber zweckmäßig, den Wärmetauscher auch für eine Umschaltung auf Kühlwasser vorzusehen, um bei Bedarf, beispielsweise dem Ausfall der Wärmeintegration bzw. der Wiedereinkoppelung der im Waschwasserkreislauf über diesen Wärmetauscher entkoppelten thermischen Energie, diese zu entkoppelnde thermische Energie dennoch aus dem Waschwasserkreislauf abführen zu können. Die Erfindung sieht daher weiterhin vor, dass die Verbindungsleitung mit Kühlwasser als Wärmeträgermedium beaufschlagbar ist.

Um die Waschstufen-Eintrittstemperatur des im Waschwasserkreislauf mit Kondensatrückführung der Waschstufe geführten Kondensates in die Waschstufe genau regeln zu können, zeichnet sich die Erfindung weiterhin dadurch aus, dass in dem Waschwasserkreislauf mit Kondensatrückführung der Waschstufe ein kühlwasserbeaufschlagter, die Waschstufeneintrittstemperatur des im Waschwasserkreislauf mit Kondensatrückführung der Waschstufe rezirkulierenden Fluids regulierender Zusatzwärmetauscher angeordnet ist. Ein solcher Zusatzwärmetauscher kann recht klein dimensioniert sein, da er lediglich die Temperaturschwankungen des in der Verbindungsleitung des Wärmetauschers geführten Wärmeträgermediums ausgleichen muss, die sich in Abhängigkeit von der in der zugeordneten Wärmesenke ergebenden Wiedereinkopplung der thermischen Energie in Abhängigkeit vom jeweiligen Kraftwerksbetriebszustand ergeben.

Um die Rückführung des in der Waschstufe auskondensierten Wasser/Wasch- oder Lösungsmittel-Anteils zum Ausgleich der Massenbilanz unter wärmetechnisch günstigen Aspekten in den Absorber/Desorber-Kreislauf des Wasch- und Lösungsmittels der CO₂-Wäsche vorzunehmen, sieht die Erfindung zwei Alternativen vor.

Für den Fall, dass mittels des im Waschwasserkreislauf mit Kondensatrückführung der Waschstufe angeordneten Wärmetauschers eine vollständige Rückintegration, d. h. Wiedereinkoppelung der mittels des Wärmetauschers entkoppelten thermischen Energie über eine damit verbundene Wärmesenke erfolgt, sieht die Erfindung vor, dass der Waschwasserkreislauf mit Kondensatrückführung der Waschstufe eine stromabwärts des Wärmetauschers abzweigende Verbindungsleitung mit einer Einmündung in eine den Desorber mit dem Absorber verbindende Waschmittelrückführleitung aufweist, wobei die Einmündung stromabwärts eines in der Waschmittelrückführleitung angeordneten Kreuzstromwärmetauschers ausgebildet ist.

Bei nicht erfolgter oder nicht vollständig erfolgter Rückintegration oder Wiedereinkoppelung der dem Waschwasserkreislauf mit Kondensatrückführung entnommenen thermischen Energie sieht die Erfindung vor, dass der Waschwasserkreislauf mit Kondensatrückführung der Waschstufe eine stromaufwärts des Wärmetauschers abzweigende Verbindungsleitung mit einer Einmündung in eine den Desorber mit dem Absorber verbindende Waschmittelrückführleitung aufweist, wobei die Einmündung stromaufwärts eines in der Waschmittelrückführleitung angeordnete Kreuzstromwärmetauschers ausgebildet ist. Dies hat den Vorteil, dass die nicht über den Wärmetauscher entnommene thermische Energie im Desorbersystem verbleibt, da sie in den Kreuzstromwärmetauscher an den dem Desorber zuströmenden CO₂-beladenen Wasch- oder Lösungsmittelstrom abgegeben wird. Da der Massenstrom des CO₂-beladenen Wasch- oder Lösungsmittels vom Absorber zum Desorber größer ist als der Rückstrom vom Desorber zum Absorber hat die geringe Temperaturerniedrigung im Rückstrom durch die Zugabe des an dieser Stelle durch die Verbindungsleitung zugeführten Kondensats keine Verringerung der Zulauftemperatur des Desorberfeedstromes zum Desorber zur Folge.

Schließlich zeichnet sich die Erfindung noch dadurch aus, dass die Waschstufe des Desorbers und die Desorptionskolonne des Desorbers als bauteilmäßig getrennte Komponenten ausgebildet sind. Diese Ausführungsform ermöglicht es, die Waschstufe und die Desorptionskolonne beabstandet voneinander anzuordnen. Aufgrund der gegenüber dem Stand der Technik vergrößerten Kühlleistung wird der die Waschstufe umfassende Teil des Desorbers bauteilsmäßig größer ausgeführt werden und damit ein höheres Gewicht als üblich aufweisen. Aus statischer Sicht kann es dann von Vorteil sein, die Waschstufe als separates Bauteil zu positionieren und beispielsweise auf dem Boden neben den die Desorptionskolonne aufweisenden Teil des Desorbers zu stellen. Auch dürfte der die Waschstufe umfassende Teil des Desorbers relativ hohe Temperaturspannungen aushalten müssen, da über eine Höhe von 3m ein Temperaturabfall um ca. 60°C erreicht werden soll. Damit dieser relativ große Temperaturgradient ohne Einfluss auf den übrigen Teil des Desorbers bleibt, ist die Abtrennung der Waschstufe ebenfalls von Vorteil.

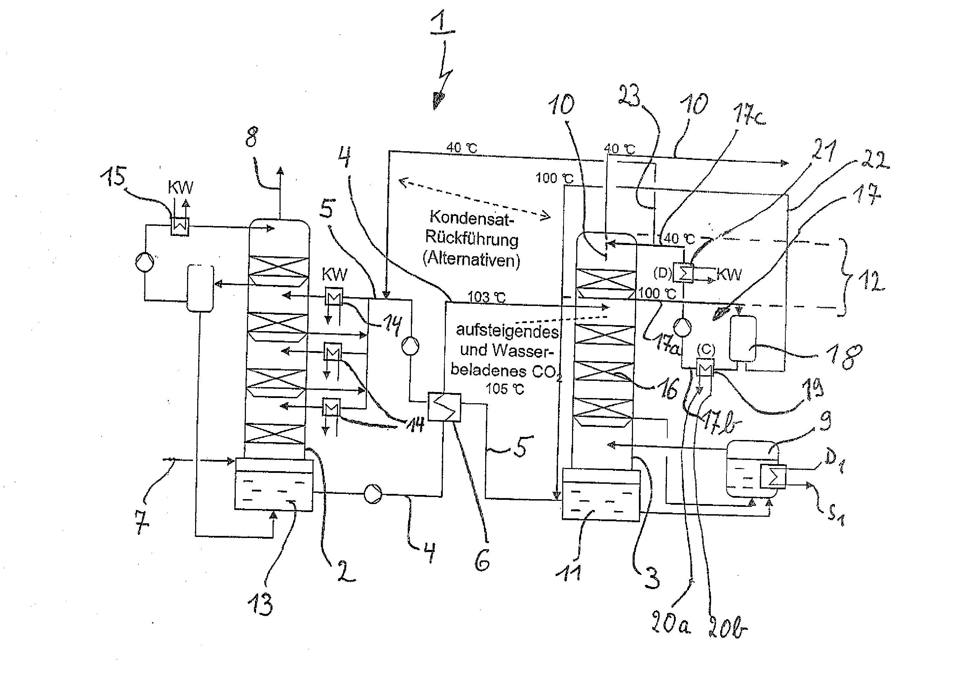

Die Erfindung ist nachstehend anhand einer Zeichnung beispielhaft näher erläutert. Diese zeigt in der einzigen Figur in schematischer Darstellung eine Ausbildung einer CO₂-Wäsche eines Rauchgasstromes mit entsprechender Verschaltung eines Desorberkopfes.

Die einzige Figur zeigt eine insgesamt mit 1 bezeichnete CO₂-Wäsche, der eine nicht dargestellte CO₂-Kompression zur Verflüssigung des in der CO₂-Wäsche erzeugten CO₂-haltigen Fluidstroms zugeordnet ist. Die CO₂-Wäsche 1 umfasst einen Absorber 2 und einen Desorber 3, zwischen welchen über Verbindungsleitungen 4, 5 mit einem zwischen diesen angeordneten Kreuzstromwärmetauscher 6 ein Wasch- oder Lösungsmittel im Kreislauf geführt wird. Dem Absorber 2 der CO₂-Wäsche 1 wird bei der Verbrennung von Brennstoff im Dampferzeuger eines Kraftwerks, vorzugsweise fossilbefeuerten, insbesondere kohlebefeuerten, Kraftwerks, entstehendes Rauchgas 7 nach einer üblichen Rauchgasreinigung zugeführt. In dem Absorber 2 wird das im Rauchgas 7 enthaltene CO₂ mittels chemischer Absorption mit einem Waschmittel entfernt, so dass CO₂-armes Rauchgas 8 aus dem Absorber 2 abgeführt wird.

Als Waschmittel wird vorzugsweise MEA (Monoethanolamin, H₂N-CH₂-CH₂-OH), aber auch DEA (Diethanolamin, HO-CH₂-CH₂-NH-CH₂-CH₂-OH) oder MDEA (Methyldiethanolamin, HO-CH₂-CH₂-NCH₃-CH₂-CH₂-OH) oder auch ein anderes Amin, verwendet. Hierbei findet die eigentliche Wäsche des Rauch- oder Abgases 7 mittels des Waschmittels in dem Absorber 2 oder einer Absorptionskolonne statt, welchen/welche das Rauchgas 7 im Gegenstrom zu dem Waschmittel durchströmt. Das Rauchgas verlässt den Absorber 2 an dessen Kopfende als CO₂-armes Abgas 8. Um das im Absorber 2 beladene Wasch- oder Lösungsmittel wieder aufzubereiten und für einen dauerhaften Einsatz zu regenerieren ist dem Absorber 2 der Desorber oder Regenerator 3, vorzugsweise in Form einer Desorptionskolonne, nachgeschaltet, dem das CO₂-reiche Wasch- oder Lösungsmittel nach dem Durchströmen des Absorbers 2 zugeführt wird. Für die Regeneration des Waschoder Lösungsmittels und das Austreiben des CO₂ aus dem Waschoder Lösungsmittel ist ein hoher Energiebedarf notwendig, der in Form von dem Wasser-Dampf-Kreislauf des Kraftwerks abgezapftem Dampf dem Verdampfer oder Reboiler 9 des Desorbers/Regenerators 3 zugeführt und von diesem wieder rückgeführt wird, wie dies in der Figur durch die Buchstaben D₁ und S₁ angedeutet ist.

Vor dem Eintritt in den Absorber 2 wird das zunächst drucklose Rauchgas isotherm auf einen Druck von unter 10 bar, beispielsweise 2 bar, verdichtet und dann durch den Absorber 2 geführt, wobei ihm das Wasch- oder Lösungsmittel entgegenströmt. Das CO₂-reiche Waschmittel oder Lösungsmittel wird danach unter Durchströmen des Kreuzstrom-Wärmetauschers 6 in den Desorber/Regenerator 3 eingeleitet. Im Desorber/Regenerator 3 wird das CO₂-reiche Waschmittel durch Erhitzung aufgebrochen und regeneriert, so dass am Kopfende des Desorbers/Regenerators 3 ein hoch CO₂-haltiger Fluidstrom 10 austritt oder als ca. 90% reiner CO₂-Strom freigesetzt über eine Leitung einer nicht dargestellten CO₂-Kompression oder CO₂-Kompressionsstufe zugeführt wird, die den CO₂-Strom auf ca. 100 bar verdichtet und verflüssigt. Danach wird das verflüssigte CO₂ einer weiteren Verwendung oder einer Lagerung zugeführt.

Da für die Desorption/Regeneration des Waschmittels im Desorber/Regenerator 3 hohe Temperaturen erforderlich sind, wird der CO₂-reiche Wasch- oder Lösungsmittelstrom im Kreuzstrom-Wärmetauscher 6 auf ca. 103°C erhitzt. Dies geschieht mit Hilfe von ebenfalls durch den KreuzstromWärmetauscher 6 geleitetem, im Desorber/Regenerator 3 regeneriertem CO₂-armem Wasch- oder Lösungsmittel 11, das im Verdampfer/Reboiler 9 ausreichend temperiert wird. Der Verdampfer oder Reboiler 9 verdampft einen Teil des Waschoder Lösungsmittels, wodurch das Kohlendioxid von dem Waschoder Lösungsmittel desorbiert wird, so dass sich am Kopfende ein nahezu reines CO₂-(H₂O)-Gemisch bildet, das in die Waschstufe 12 am Kopf des Desorbers/Regenerators 3 gelangt, wo das Wasser auskondensiert, so dass ein nahezu reiner CO₂-Strom 10 abgeführt wird. Das regenerierte, CO₂-arme Waschoder Lösungsmittel 29 wird am Sumpf des Desorbers/Regenerators 3 abgezogen, über den Wärmetauscher 6 geführt, in welchem der entgegenströmende, beladene, CO₂-reiche Wasch- oder Lösungsmittelstrom 13 erwärmt wird. Nach Durchlaufen einer Pumpe auf den notwendigen Absorberdruck gebracht und entsprechend abgekühlt, wird das CO₂-arme Waschoder Lösungsmittel 29 wieder dem Absorber 2 zugeführt. Da sich während des ganzen Vorganges Verluste an Wasser und Waschmittel ergeben, werden diese an geeigneter Stelle wieder dem System zugegeben.

Während der Absorber 2 wie aus dem Stand der Technik bekannt ausgebildet und mit Zwischenkühlungen 14 und einer Waschstufenkühlung 15 ausgestattet ist, ist der Desorberkopf des Desorbers 3 mit einer Waschstufe 12 ausgestattet, die die gesamte Kühlleistung erbringt, die notwendig ist, um den beladenen, mit einer Temperatur von ca. 103°C in den Desorber 3 eintretenden CO₂-reichen Wasch- oder Lösungsmittel (13)-strom und den mit einer Temperatur von ca. 105°C aus der Desorptionskolonne 16 aufsteigenden und in die Waschstufe 12 eintretenden, wasserbeladenen und CO₂-beladenen Fluidstrom auf die gewünschte Austrittstemperatur von 40°C des CO₂-haltigen Fluidstroms 10 abzukühlen. Um die für diese Kühlung notwendige Auskoppelung thermischer Energie erzeugen zu können, ist die Waschstufe 12 mit einem Waschwasserkreislauf 17 mit Kondensatrückführung ausgestattet, in welchem Kondensat über einen Kreislaufabschnitt 17a, einen Kondensatsammler 18, einen Kondensatkreislaufabschnitt 17b und einen Kondensatkreislaufabschnitt 17c aus der Waschstufe 12 im Kopf des Desorbers 3 heraus und wieder in den Desorber 3 hinein geführt wird. In dem Waschwasserkreislauf 17 mit Kondensatrückführung ist stromabwärts des Kondensatsammlers 18 in dem Kondensatkreislaufabschnitt 17b ein Wasser/Wasser-Wärmetauscher 19 angeordnet, mit welchem das in dem Waschwasserkreislauf 17 mit Kondensatrückführung geführte Kondensat von einer Eintrittstemperatur von ca. 100°C auf ca. 40°C abgekühlt werden kann. Die mittels dieses Wasser/Wasser-Wärmetauschers 19 ausgekoppelte thermische Energie wird über die an den Wärmetauscher 19 angeschlossenen, ein Wärmeträgermedium führenden Leitungen 20a, 20b einer daran angeschlossenen, nicht dargestellten, als Wärmesenke fungierenden Komponente des Kraftwerksprozesses zugeführt, so dass über diese Wärmesenke die über den Wärmetauscher 19 entkoppelte thermische Energie im Wege einer Wärmerückintegration wieder in den Wärmestrom des Kraftwerkes eingekoppelt werden kann. Auf diese Weise wird erreicht, dass die Abkühlung des CO₂-haltigen Fluidstromes 10 ausschließlich in der Waschstufe 12 des Desorbers 3 durchgeführt und die dazu notwendige Auskoppelung thermischer Energie aus dem CO₂-haltigen Fluidstrom ausschließlich im und/oder über den Waschwasserkreislauf 17 mit Kondensatrückführung der Waschstufe 12 erreicht wird. Die Waschstufe 12 des Desorbers 3 weist somit eine die für die Auskoppelung der zur Erreichung der für die Weiterbehandlung des CO₂-haltigen Fluidstromes 10 geeigneten Temperatur von ca. 40°C insgesamt notwendigen thermischen Energie ausreichende Kühlleistung auf und stellt in den Waschwasserkreislauf 17 mit Kondensatrückführung der Waschstufe 12 mindestens einen zumindest zur annähernden Erreichung dieser Kühlleistung dimensionierten Wärmetauscher bereit.

Die die Wiedereinkopplung der in dem Waschwasserkreislauf 17 mit Kondensatrückführung der Waschstufe 12 ausgekoppelten thermischen Energie in den Wärmestrom des Kraftwerkes oder Kraftwerkprozesses ermöglichende und ein Wärmeträgermedium führende Verbindungsleitung 20a, 20b ist in nicht dargestellter Weise mit Kühlwasser als Wärmeträgermedium beaufschlagbar. Falls über die an die Verbindungsleitung 20a, 20b angeschlossene Wärmesenke nicht genügend Wärme, beispielsweise aufgrund einer Betriebsstörung, abgeführt werden sollte, kann durch die Beaufschlagung mit Kühlwasser dennoch die notwendige Kühlleistung in dem Waschwasserkreislauf 17 mit Kondensatrückführung der Waschstufe 12 bereitgestellt werden.

Um Schwankungen in der durch die in der Wärmesenke bestimmte Abnahme von thermischer Energie bestimmte Auskoppelung thermischer Energie in dem Wasser/Wasser-Wärmetauscher 19 auszugleichen und die Waschstufeneintrittstemperatur im Kondensatkreislaufabschnitt 17c regulieren zu können, ist im Kondensatkreislaufabschnitt 17b ein vorzugsweise kühlwasserbeaufschlagter Zusatzwärmetauscher 21 angeordnet. Zur Rückführung eines Teils des im Waschwasserkreislauf 17 mit Kondensatrückführung geführten, auskondensierten Wasser/Wasch- oder Lösungsmittel-Kondensats zum Ausgleich der Massenstrombilanz im Desorber sind zwei Alternativen dargestellt, die gewünschtenfalls auch in Kombination realisiert werden können. In der ersten Alternative zweigt aus dem Waschwasserkreislauf 17 mit Kondensatrückführung stromaufwärts des Wärmetauschers 19 eine Verbindungsleitung 22 ab, die das an dieser Stelle noch ca. 100°C heiße Wasser/Wasch- oder Lösungsmittel-Kondensat zu einer Einmündung in die den Desorber 3 mit dem Absorber 2 verbindende Waschmittelrückführleitung 5 führt, welche Einmündung stromaufwärts des in der Waschmittelrückführleitung 5 angeordneten Kreuzstromwärmetauschers 6 angeordnet ist. In der alternativen Ausführungsform zweigt eine Verbindungsleitung 23 von dem Kondensatkreislaufabschnitt 17c ab und führt das hier ca. 40°C warme Wasser/Wasch- oder Lösungsmittelkondensat zu einer Einmündung in die den Desorber 3 mit dem Absorber 2 verbindende Waschmittelrückführleitung 5, die stromabwärts des in der Waschmittelrückführleitung 5 angeordneten Kreuzstromwärmetauschers 6 ausgebildet ist.

Im Ausführungsbeispiel sind die Desorptionskolonne 16 und die Waschstufe 12 übereinander in dem als ein Bauteil ausgebildeten Desorber 3 angeordnet. In einer nicht dargestellten Ausführungsform ist es aber auch möglich, die Waschstufe 12 und den Bereich der Desorptionskolonne 16 des Desorbers 3 als zwei getrennte Bauteile auszubilden, die nebeneinander und beabstandet voneinander angeordnet, beispielsweise beide auf dem Boden angeordnet sind. Diese Ausbildung der Waschstufe und der Desorptionskolonne als bauteilmäßig getrennte Komponenten bietet bei einer aufgrund der erhöhten Kühlleistung vergrößerten Waschstufe Vorteile bezüglich der statischen Ausbildung dieser Komponente und des Abfangens von Temperaturspannungen im Material des Behälters aufgrund des großen Temperaturunterschieds zwischen der Temperatur der eintretenden und der austretenden Waschflüssigkeit beziehungsweise des Kondensats.

## Patentansprüche

1. Verfahren zur Abkühlung eines CO₂-haltigen, in einem Desorber (3) einer der Brennstoffverbrennung eines Kraftwerks nachgeschalteten CO₂-Wäsche (1) des Rauchgases (7) mittels chemischer Absorption entstehenden Fluidstromes (10) in einer Waschstufe (12) des Desorbers (3) auf eine für seine Weiterbehandlung in einer dem Desorber (3) nachgeschalteten und/oder zugeordneten CO₂-Kompressionsstufe geeignete Temperatur,
**dadurch gekennzeichnet,**
**dass** die Abkühlung des CO₂-haltigen Fluidstromes (10) ausschließlich in der Waschstufe (12) des Desorbers (3) durchgeführt und die dazu notwendige Auskoppelung thermischer Energie aus dem CO₂-haltigen Fluidstrom (10) ausschließlich im und/oder über einen Waschwasserkreislauf (17) mit Kondensatrückführung der Waschstufe (12) durchgeführt wird.

2. Verfahren nach Anspruch 1, **dadurch gekennzeichnet, dass** das Verfahren in einer einem fossil befeuerten Kraftwerk nachgeschalteten CO₂-Wäsche (1) durchgeführt wird.

3. Verfahren nach Anspruch 1 oder 2, **dadurch gekennzeichnet, dass** das Verfahren in einem Desorber (3) nach einem der Ansprüche 4 - 12 durchgeführt wird.

4. Desorber (3) mit zugeordneter Waschstufe (12), der mit einem zugeordneten Absorber (2) Bestandteil einer CO₂-Wäsche (1) des Rauchgases (7) eines Kraftwerks ist und in dem ein CO₂-haltiger, auf eine für seine Weiterbehandlung in einer nachgeschalteten CO₂-Kompressionsstufe geeignete Temperatur gekühlter Fluidstrom (10) entsteht,
**dadurch gekennzeichnet,**
**dass** die dem Desorber (3) zugeordnete Waschstufe (12) eine die Auskopplung der zur Erreichung der geeigneten Temperatur des CO₂-haltigen Fluidstroms (10) insgesamt notwendigen thermischen Energie bewirkende Kühlleistung aufweist oder bereitstellt und in einem Waschwasserkreislauf (17) mit Kondensatrückführung der Waschstufe (12) mindestens ein zumindest zur annähernden Erreichung der Kühlleistung dimensionierter Wärmetauscher (19) angeordnet ist.

5. Desorber (3) nach Anspruch 4, **dadurch gekennzeichnet, dass** er Bestandteil einer CO₂-Wäsche (1) eines fossil befeuerten, insbesondere kohlebefeuerten, Kraftwerks ist.

6. Desorber (3) nach Anspruch 4 oder 5, **dadurch gekennzeichnet, dass** der Wärmetauscher (19) als Wasser/Wasser - Wärmetauscher ausgebildet ist.

7. Desorber (3) nach einem der Ansprüche 4 - 6, **dadurch gekennzeichnet, dass** der Wärmtauscher (19) eine die Wiedereinkoppelung der in dem Waschwasserkreislauf (17) mit Kondensatrückführung der Waschstufe (12) ausgekoppelten thermischen Energie in den Wärmestrom des Kraftwerks oder Kraftwerksprozesses bewirkende und ein Wärmeträgermedium führende Verbindungsleitung (20a, 20b) aufweist.

8. Desorber (3) nach Anspruch 7, **dadurch gekennzeichnet, dass** die Verbindungsleitung (20a, 20b) mit Kühlwasser als Wärmeträgermedium beaufschlagbar ist.

9. Desorber (3) nach einem der Ansprüche 4 - 8, **dadurch gekennzeichnet, dass** in dem Waschwasserkreislauf (17) mit Kondensatrückführung der Waschstufe (12) ein kühlwasserbeaufschlagter, die Waschstufeneintrittstemperatur des im Waschwasserkreislauf (17) mit Kondensatrückführung der Waschstufe (12) rezirkulierten Fluids regulierender Zusatzwärmetauscher (21) angeordnet ist.

10. Desorber (3) nach einem der Ansprüche 4- 9, **dadurch gekennzeichnet, dass** der Waschwasserkreislauf (17) mit Kondensatrückführung der Waschstufe (12) eine stromabwärts des Wärmetauschers (19) abzweigende Verbindungsleitung (22) mit einer Einmündung in eine den Desorber (3) mit dem Absorber (2) verbindende Waschmittelrückführleitung (5) aufweist, wobei die Einmündung stromabwärts eines in der Waschmittelrückführleitung (5) angeordneten Kreuzstromwärmetauschers (6) ausgebildet ist.

11. Desorber (3) nach einem der Ansprüche 4 - 9, **dadurch gekennzeichnet, dass** der Waschwasserkreislauf (17) mit Kondensatrückführung der Waschstufe (12) eine stromaufwärts des Wärmetauschers (19) abzweigende Verbindungsleitung (23) mit einer Einmündung in eine den Desorber (3) mit dem Absorber (2) verbindende Waschmittelrückführleitung (5) aufweist, wobei die Einmündung stromaufwärts eines in der Waschmittelrückführleitung (5) angeordneten Kreuzstromwärmetauschers (6) ausgebildet ist.

12. Desorber (3) nach einem der Ansprüche 4 - 11, **dadurch gekennzeichnet, dass** die Waschstufe (12) des Desorbers (3) und die Desorptionskolonne (16) des Desorbers (3) als bauteilmäßig getrennte Komponenten ausgebildet sind.
